# EUROPÄISCHE PATENTANMELDUNG

(11) **EP 0 859 163 A1**
(43) Veröffentlichungstag der Anmeldung: **19.08.1998**
(21) Anmeldenummer: 98102240.3
(22) Anmeldetag: 10.02.1998
(51) Int. Cl.: F16D 65/04

(54) **Bremsbacke und Verfahren zu ihrer Herstellung**

(30) Priorität: 15.02.1997 DE 19705836
(71) Anmelder: ITT MANUFACTURING ENTERPRISES, INC., Wilmington, Delaware 19801 (US)
(72) Erfinder: Sundheim, Ralf, 60316 Frankfurt (DE)
(74) Vertreter: Portwich, Peter

(57) **Zusammenfassung**

Bremsbacken (1) für Bremsanlagen von Kraftfahrzeugen bestehen aus einem Belagträger (2) zur Halterung, Führung und Abstützung der Bremsbacke an einem Bremssattel, sowie aus einem an dem Belagträger (2) haftfest verbundenen Reibbelag (3) zum Wirkeingriff mit der Bremsscheibe bzw. Bremstrommel. Gemäß der Erfindung ist der Belagträger (2) ein Gefüge aus einem hitzefesten, geschäumten Werkstoff (4), insbesondere Aluminiumschaum, mit einem Blechteil (5, 6) aus hochfestem metallischen Werkstoff, insbesondere Stahlblech. Vorzugsweise ist das Gefüge ein sandwichartig aufgebautes Verbundteil bestehend aus einer Strukturlage des geschäumten Werkstoffes, die zumindest auf einer Seite mit einem Stahlblech verbunden ist. Mit dem erfindungsgemäß aufgebauten Belagträger läßt sich eine Gewichtreduzierung im Sinn einer Leichtbauweise der Bremsanlage, eine Geräuschdämpfung und eine Temperatursenkung der Bremsflüssigkeit bei Bremsvorgängen erzielen.

## Beschreibung

Die Erfindung bezieht sich auf eine Bremsbacke mit einem Belagträger und einem daran haftfest verbundenen Reibbelag.

Die Erfindung bezieht sich ferner auf ein Verfahren zum Herstellen derartiger Bremsbacken.

Marktgängige Bremsbacken der vorbeschriebenen Art weisen üblicherweise Belagträger, auch Rückenplatte genannt, auf, die aus einem entsprechend dicken Stahlblech ausgestanzt worden sind. Diese aus massivem Stahl, z. B. aus austenitischem Bandstahl 52, bestehenden Belagträger haben ein relativ hohes Gewicht, was dem Bestreben, das Gewicht von Fahrzeugen, ausgerüstet mit entsprechenden Bremsen, zu senken entgegenläuft. Da sich das Stahlblech beim Bremsen stark erhitzt, wird auch die Temperatur der Bremsflüssigkeit erhöht, was sich bekanntlich bei starker Beanspruchung, z. B. bei Paßfahrten, nachteilig auf deren Zusammensetzung auswirken könnte. Durch die hohe Festigkeit (St 52-3) des Stahles besitzt der bekannte Belagträger nur ein sehr geringes Dämpfungsverhalten in bezug auf durch das Bremsen erzeugte Schwingungen bzw. Quietschgeräusche, so daß im bekannten Fall ein zusätzliches Dämpfungsblech vorgesehen ist.

Es ist auch bekannt (DE 31 24 527 A1), den Belagträger aus duroplastischem Kunststoff aufzubauen, mit einer von dem Kunststoff allseitig umschlossenen Verstärkungseinlage. Mit einem derartigen Belagträger lassen sich zwar sowohl das Gewicht als auch unzulässige Aufheizungen sowie das Auftreten von Quietschgeräuschen reduzieren, jedoch haben diese Kunststoff-Belagträger wiederum den Nachteil der geringen Festigkeit und der hohen Temperaturempfindlichkeit.

Es ist auch bekannt (DE-U 88 09 363.8), bei Bauteilen für Bremsen und Kupplungen zwischen der vorzugsweise metallischen Trägerschicht und der Reibbelagschicht eine Elastomer-Zwischenschicht vorzusehen, insbesondere um die durch die Schwingungen beim Bremsen bzw. Kuppeln erzeugten Geräusche zu dämpfen. Eine nach diesem bekannten Prinzip aufgebaute Bremsbacke hätte den Nachteil der schlechten Anbindung der Reibbelagschicht, so daß Abscherungen auftreten können. Ferner treten Temperaturprobleme auf.

Der Erfindung liegt die Aufgabe zugrunde, die eingangs bezeichnete Bremsbacke hinsichtlich des Belagträgers so auszubilden, daß eine deutliche Gewichtsreduzierung in Verbindung mit einer ausgeprägten Geräuschdämpfung sowie Senkung der Bremsflüssigkeits-Temperaturen bei Bremsvorgängen erzielbar ist, bei einer weiterhin wirtschaftlichen Herstellungsweise.

Die Lösung dieser Aufgabe gelingt gemäß der Erfindung dadurch, daß der Belagträger ein Gefüge aus einem hitzefesten geschäumten Werkstoff mit einem Blechteil aus hochfestem metallischen Werkstoff ist.

Durch den erfindungsgemäßen Aufbau der Bremsbacke hinsichtlich des Belagträgers wird eine ausreichend hohe Festigkeit erreicht und gleichzeitig das Gewicht des Belagträgers im Sinne der angestrebten Leichtbauweise verringert. Ein weiterer Vorteil ergibt sich aus der guten Dämpfungseigenschaft des geschäumten Werkstoffes in der Strukturlage. Dadurch können Schwingungen und Geräusche vermindert werden, und zwar in einem Maße, daß das übliche Dämpfungsblech entfallen kann. Auch können durch die Lufteinschlüsse in dem geschäumten Werkstoff, was eine schlechte Wärmeleitung bedingt, die Bremsflüssigkeits-Temperaturen gesenkt werden.

Die vorgenannten Vorteile treten besonders prägnant hervor, wenn gemäß Weiterbildungen der Erfindung die Strukturlage aus Aluminiumschaum gebildet ist und die diese Strukturlage umgebenden Blechteile aus Stahlblech bestehen.

Das Gefüge kann auf unterschiedliche Weise gebildet werden. Besondere Vorteile hinsichtlich der vorgenannten Ziele ergeben sich, wenn gemäß einer Ausgestaltung der Erfindung das Gefüge aus einem sandwichartig ausgebildeten Verbundteil gebildet ist, bestehend aus einer Strukturlage des geschäumten Werkstoffes und dem an mindestens einer Seite der Strukturlage verbundenen Blechteil.

Vorzugsweise ist dabei ein Stahlblech auf beiden Seiten der Strukturlage befestigt.

Hinsichtlich des eingangs bezeichneten Herstellungsverfahrens für derartige Bremsbacken gelingt die Lösung der Aufgabe erfindungsgemäß dadurch, daß zunächst ein großflächiges plattenförmiges Verbundteil bestehend aus der Strukturlage und den beidseitigen Blechen als Halbzeug hergestellt wird, aus dem danach die Bremsbacken mit ihrer vorgegebenen geometrischen Konfiguration ausgestanzt werden, die anschließend mit dem Reibbelag versehen werden.

Gemäß einer alternativen Ausgestaltung der Erfindung ist die Bremsbacke so ausgebildet, daß das Gefüge aus einem mit Hohlräumen versehenen Blechteil besteht, bei dem zumindest die Hohlräume mit dem geschäumten Werkstoff ausgefüllt sind. Dabei kann zusätzlich auf der dem Reibbelag abgewandten Seite des Blechteiles eine Schicht des geschäumten Werkstoffes aufgebracht sein.

Hinsichtlich der Herstellung derartiger Bremsbacken gelingt die Lösung der Aufgabe dadurch, daß zunächst aus einem plattenförmigen Blech die Blechteile gemäß der geometrischen Konfiguration der Rückenplatte, einschließlich der Hohlräume darin, ausgestanzt werden, daß danach die ausgestanzten Blechteile mit dem geschäumten Werkstoff und danach mit dem Reibbelag versehen werden.

Weitere Merkmale sowie Vorteile der Erfindung ergeben sich aus der Beschreibung eines in den Zeichnungen dargestellten Ausführungsbeispiels. Es zeigen:
- Fig. 1: eine erfindungsgemäße, sandwichartig aufgebaute Bremsbacke für Scheibenbremsen in einer Seitenansicht,
- Fig. 2: eine Schnittansicht durch die Bremsbacke nach Fig. 1 entlang der Schnittlinie A-A,
- Fig. 3: einen vergrößerten Ausschnitt aus der Schnittdarstellung nach Fig. 2,
- Fig. 4: eine Variante der sandwichartig aufgebauten Bremsbacke nach Fig. 3 mit einer einseitig aufgeschäumten Aluminiumschaumschicht auf einem Stahlblech als Rückenplatte,
- Fig. 5: eine Schnittansicht durch die Bremsbacke nach Fig. 4 entlang der Schnittlinie A-A,
- Fig. 6: einen vergrößerten Ausschnitt aus der Schnittdarstellung nach Fig. 5,
- Fig. 7: in einer Längsschnitt-Darstellung eine andere Ausführungsform der erfindungsgemäßen Bremsbacke mit Hohlräumen in einer Stahlplatte, die in den Hohlräumen und flächig auf der dem Kolben zugewandten Seite mit einem Aluminiumschaumwerkstoff versehen ist,
- Fig. 8: eine kolbenseitige Rückansicht der Bremsbacke nach Fig. 7,
- Fig. 9: einen Schnitt durch die Bremsbacke nach Fig. 7 entlang der Linie A-A,
- Fig. 10: eine Variante der Ausführungsform nach Fig. 7, bei der nur die Hohlräume in der Stahl-Rückenplatte mit dem Aluminiumschaumwerkstoff ausgefüllt sind, und
- Fig. 11: einen Schnitt durch die Ausführungsform nach Fig. 10 entlang der Linie A-A.

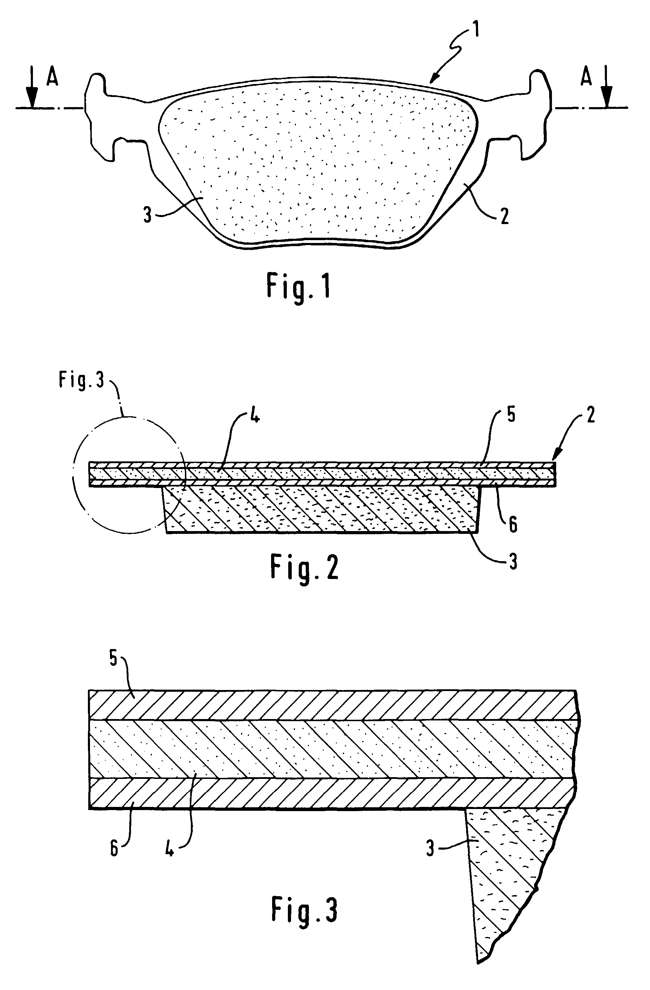

Die die in den Figuren 1-3 dargestellte Bremsbacke für Scheibenbremsen besteht aus einem Belagträger 2 und einem daran haftfest verbundenen Reibbelag 3. Der Belagträger 2 dient in üblicher, nicht dargestellter Weise zur Halterung, Führung und Abstützung der Bremsbacke 1 an einem Bremssattel einer Scheibenbremse für Kraftfahrzeuge. Der Reibbelag andererseits dient zum Wirkeingriff mit einer ebenfalls nicht dargestellten Bremsscheibe der Bremsanlage aufgrund der hydraulischen Betätigung eines Kolbens, der an der dem Reibbelag 3 entgegengesetzten Seite des Belagträgers 2 angreift.

Wie aus den Figuren 2 und 3 hervorgeht, ist der Belagträger 2 ein sandwichartig ausgebildetes Verbundteil, bestehend zunächst aus einer Strukturlage 4 aus einem hitzefesten, geschäumten strukturfesten Werkstoff. Diese Strukturlage ist beidseitig jeweils mit einem Blechteil 5, 6 aus hochfestem metallischen Werkstoff mit großem Elastizitätsmodul verbunden.

Die Strukturschicht hat dabei vorzugsweise eine Dicke von 2-5 mm, wogegen die Dicke der Blechteile in der Größenordnung von 1-2 Millimeter liegt.

Das Verbinden der Strukturlage 4 mit den Blechteilen 5, 6 erfolgt auf konventionelle Weise, z. B. durch Verkleben oder Erwärmen, indem ein metallisches Halbzeug zwischen den Blechteilen erwärmt wird unter Aufschäumen und gleichzeitigem Verbinden mit den Blechteilen bzw. ähnlich Verbundgießen.

Vorzugsweise bestehen die Blechteile aus Stahlblech mit der Bezeichnung Bd DIN 1016-St 52-3 und die Strukturlage aus Aluminiumschaum. Der Aluminiumschaum ist ein moderner Werkstoff, der Werkstücke mit einem besonders niedrigen Werkstückgewicht ermöglicht. Bei der Herstellung des Aluminiumschaumes wird eine Pulvermischung aus pulverrisiertem Aluminium und einem Treibmittel hergestellt, die zu einem Zwischenprodukt kompaktiert wird. Dieses metallische Halbzeug wird in einem zweiten Schritt durch Erwärmen aufgeschäumt. Das fein verteilte Treibmittel setzt dabei Wasserstoff frei, der das Metall aufquellen und entsprechend viele Hohlräume mit Lufteinschlüssen entstehen läßt. Der Werkstoff Aluminiumschaum kommt dabei zu einer Dichte zwischen 0,4 und 0,5 g/cm³, ist daher um ca 1/5 leichter als kompaktes Aluminium.

In Verbindung mit den Stahlblechteilen 5, 6 wird eine hohe mechanische Steifigkeit bzw. Festigkeit für das Verbundteil, die Bremsbacke 1 erreicht und gleichzeitig sein Gewicht beachtlich verringert. Ein weiterer Vorteil ergibt sich durch die gute Dämpfungseigenschaft des Aluminiumschaumes. Dadurch können durch den Bremsvorgang entstehende Schwingungen oder Geräusche vermindert werden. Die Lufteinschlüsse in dem Aluminiumschaum bedingen, daß dieser Werkstoff ein schlechter Wärmeleiter ist, wodurch mit Vorteil die ansonsten beim übermäßigen Bremsen auftretenden hohen Bremsflüssigkeitstemperaturen vermieden werden.

Anstelle des Stahlblechs für die Teile 5, 6 kann z.B. auch MMC-Werkstoff (Aluminium mit Keramikteilchen) verwendet werden. Dieser Werkstoff hat zwar eine hohe Festigkeit und ist leicht, ist jedoch spröde und teurer als der Stahl.

Anstelle des Aluminiumschaumes kann grundsätzlich auch beispielsweise Magnesiumschaum verwendet werden, wenngleich der Aluminiumschaum der bevorzugte Werkstoff für die Strukturlage 4 ist, weil Magnesium teurer und leichter entzündbar ist.

Es versteht sich, daß neben den in den Figuren 2 bis 3 dargestellten Schichten noch andere Schichten mit speziellen Funktionen zusätzlich aufgebracht werden können, z. B. eine abrasive Schicht zwischen dem Blechteil 6 und dem Reibbelag 3, das bei nahezu abgefahrenen Reibbelägen zum "Glätten" der Bremsscheibe dient.

Die Erfindung ist auch nicht auf Bremsbacken für Scheibenbremsen beschränkt. Es können auch Bremsbacken für Trommelbremsen entsprechend der Erfindung ausgebildet werden.

Um die erfindungsgemäßen Bremsbacken auf wirtschaftliche Weise herzustellen, wird zunächst ein großflächiges plattenförmiges Verbundteil, bestehend aus der Strukturlage 2 und den beidseitigen Blechteilen 5, 6 mit konventionellen Methoden als Halbzeug hergestellt. Aus diesem Halbzeug werden dann mit konventionellen Werkzeugen die Belagträger 2 der Bremsbacken entsprechend ihrer vorgegebenen geometrischen Konfiguration ausgestanzt. Danach werden die einzelnen Belagträger 2 mit dem Reibbelag 3, ebenfalls auf konventionelle Art, versehen.

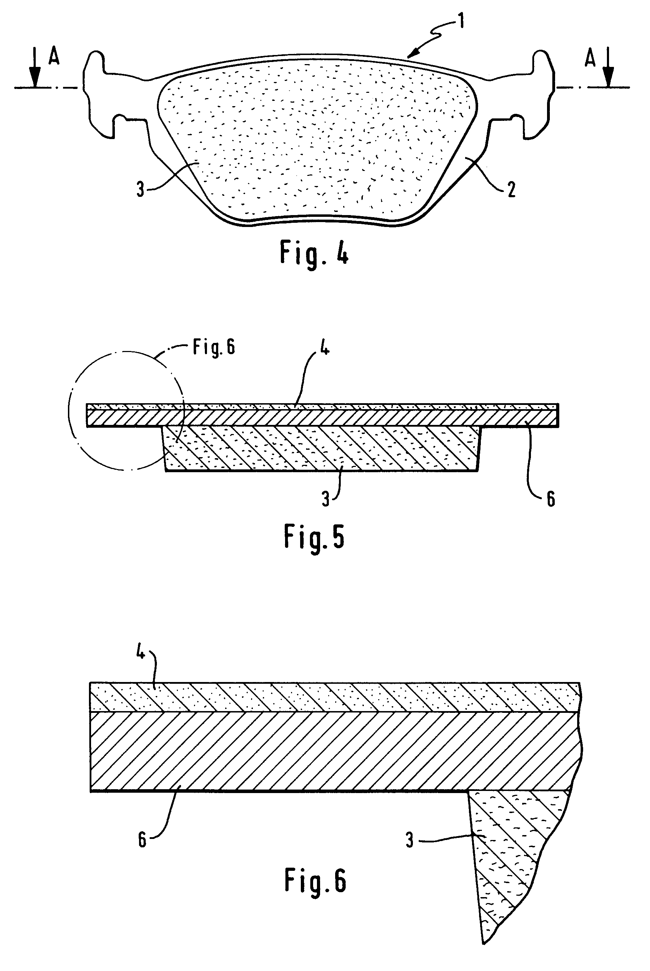

In der Fig. 4 mit den zugehörigen Schnittdarstellungen nach den Fig. 5 und 6 ist eine Variante der sandwichartigen Bauweise nach den Fig. 1-3 dargestellt. Bei dieser Variante ist der Werkstoff Aluminiumschaum 4 nur einseitig auf dem Stahlblech 6, das im Vergleich zur Ausführung nach den Fig. 1-3 entsprechend dicker ausgebildet ist, aufgeschäumt.

Diese Variante kann ebenso wie die Sandwichbauweise nach den Fig. 1-3 aus großen vorgefertigten Verbundblechen durch anschließendes Ausstanzen hergestellt werden, jedoch kostengünstiger.

Im übrigen gelten für die Variante nach den Fig. 4-6 die zu dem Verbundteil nach den Fig. 1-3 beschriebenen Möglichkeiten, insbesondere hinsichtlich der Werkstoffe, entsprechend.

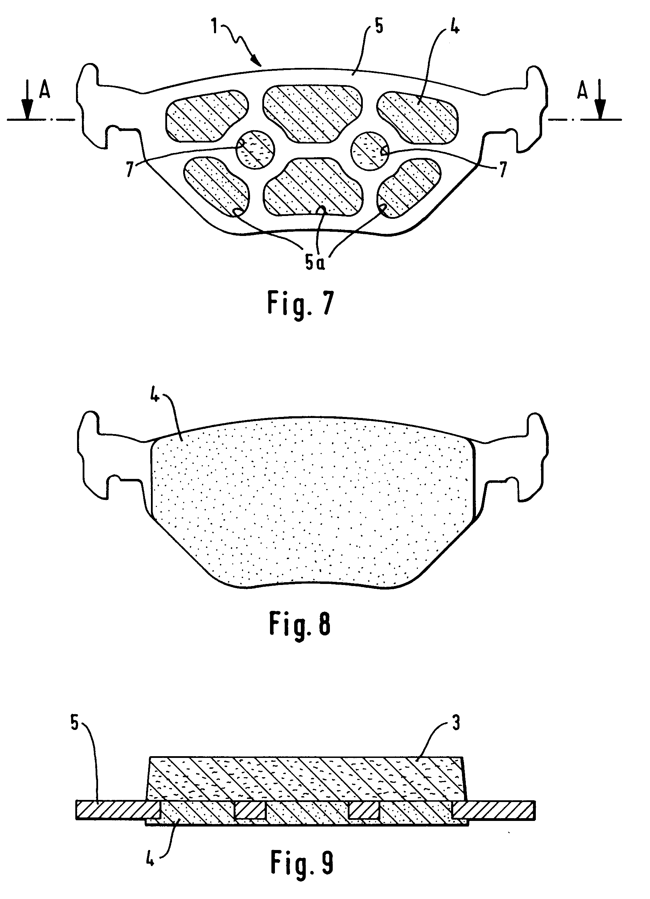

Die Fig. 7-9 zeigen eine Ausführungsform der Erfindung, bei der kein sandwichartiger Aufbau gewählt wurde, sondern bei der in der Rückenplatte, bestehend aus dem Stahlblech 5, Hohlräume 5a ausgebildet sind, die zusammen mit der kolbenseitigen Fläche der Rückenplatte 5 mit dem Aluminiumschaum 4 ausgeschäumt sind. Zusätzlich sind Hohlräume 7 zur Abstützung des Reibbelages 3 vorgesehen.

Diese Ausführungsform der Erfindung hat den Vorteil, daß die Rückenplatte wegen der Hohlräume in dem Stahlblech 5 noch leichter gestaltet werden kann und auch insoweit kostengünstiger ist, als im Bereich der Hammerköpfe kein Aluminiumschaum vorhanden sein muß. Allerdings läßt sich diese Variante nicht über vorgefertigte große Verbundbleche herstellen. Die Stahlblech-Rückenplatte muß zunächst einschließlich ihrer Hohlräume ausgestanzt werden und kann erst danach mit Aluminiummaterial verbunden und aufgeschäumt werden.

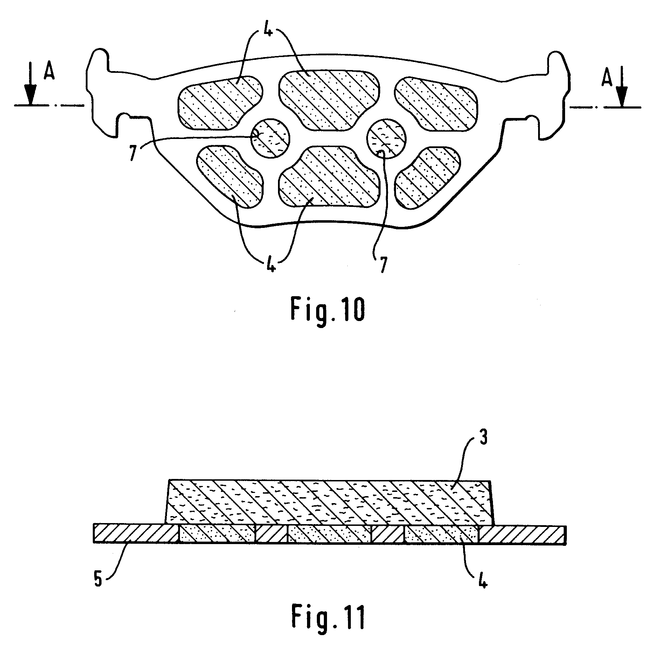

Gemäß einer in den Fig. 10 und 11 dargestellten Variante der Bremsbacke nach den Fig. 7-9 besteht grundsätzlich die Möglichkeit, nur die Hohlräume der Stahlblech-Rückenpaltte 5 mit Aluminiumschaum 4 auszuschäumen mit einem bündigen Abschluß auf der dem Reibbelag 3 abgewandten Seite der Rückenplatte.

Bei einer derartigen Ausführungsform ist ebenfalls eine Leichtbauweise gegeben, wenngleich die Dämpfungseigenschaften und die Wärmeisolation bei der Ausführung nach den Fig. 7-9 besser sein wird. Gegebenenfalls ist zusätzlich ein an sich bekanntes Dämpfungsblech an der Rückenplatte anzubringen.

Im übrigen gelten für die Ausführungsformen nach den Fig. 7-11 die zu dem Verbundteil nach den Fig. 1-3 beschriebenen Möglichkeiten, insbesondere hinsichtlich der Werkstoffe, entsprechend.

## Patentansprüche

1. Bremsbacke (1) mit einem Belagträger (2) und einem daran haftfest verbundenen Reibbelag (3), dadurch **gekennzeichnet**, daß der Belagträger (2) ein Gefüge aus einem hitzefesten geschäumten Werkstoff (4) mit einem Blechteil (5, 6) aus hochfestem metallischen Werkstoff ist.

2. Bremsbacke nach Anspruch 1, dadurch **gekennzeichnet**, daß das Blechteil (5, 6) aus Stahlblech besteht.

3. Bremsbacke nach Anspruch 1 oder 2, dadurch **gekennzeichnet**, daß der geschäumte Werkstoff (4) aus Aluminiumschaum gebildet ist.

4. Bremsbacke nach einem der Ansprüche 1-3, dadurch **gekennzeichnet**, daß das Gefüge aus einem sandwichartig ausgebildeten Verbundteil gebildet ist, bestehend aus einer Strukturlage des geschäumten Werkstoffes (4) und dem an mindestens einer Seite der Strukturlage verbundenen Blechteil (5, 6).

5. Bremsbacke nach Anspruch 4, dadurch **gekennzeichnet**, daß die Strukturlage aus dem geschäumten Werkstoff (4) beidseitig mit einem Stahlblech (5, 6) verbunden ist.

6. Verfahren zum Herstellen der Bremsbacken nach einem der Ansprüche 1 bis 5, dadurch **gekennzeichnet**, daß zunächst ein großflächiges plattenförmiges Verbundteil bestehend aus der Strukturlage und den beidseitigen Blechen als Halbzeug hergestellt wird, aus dem danach die Bremsbacken mit ihrer vorgegebenen geometrischen Konfiguration ausgestanzt werden, die anschließend mit dem Reibbelag versehen werden.

7. Bremsbacke nach einem der Ansprüche 1-3, dadurch **gekennzeichnet**, daß das Gefüge aus einem mit Hohlräumen (5a) versehenen Blechteil (5) besteht, bei dem zumindest die Hohlräume mit dem geschäumten Werkstoff (4) ausgefüllt sind.

8. Bremsbacke nach Anspruch 7, dadurch **gekennzeichnet**, daß zusätzlich auf der dem Reibbelag (3) abgewandten Seite des Blechteiles (5) eine Schicht des geschäumten Werkstoffes (4) aufgebracht ist.

9. Bremsbacke nach Anspruch 7 oder 8, dadurch **gekennzeichnet**, daß im Blechteil (5) zusätzlich mindestens ein Hohlraum (7) zur Abstützung des Reibbelages (3) angebracht ist.

10. Verfahren zum Herstellen der Bremsbacken nach einem der Ansprüche 7-9, dadurch **gekennzeichnet**, daß zunächst aus einem plattenförmigen Blech die Blechteile gemäß der geometrischen Konfiguration der Rückenplatte, einschließlich der Hohlräume darin, ausgestanzt werden, daß danach die ausgestanzten Blechteile mit dem geschäumten Werkstoff und danach mit dem Reibbelag versehen werden.
